# EUROPÄISCHE PATENTANMELDUNG

(11) **EP 1 982 894 A2**
(43) Veröffentlichungstag der Anmeldung: **22.10.2008**
(21) Anmeldenummer: 08005042.0
(22) Anmeldetag: 18.03.2008
(51) Int. Cl.: B62B 3/00

(54) **Transportbehälter**

(30) Priorität: 17.04.2007 DE 202007005620 U
(71) Anmelder: GEBHARDT Transport- und Lagersysteme GmbH, 93413 Cham (DE)
(72) Erfinder: Artinger, Manfred, 94530 Auerbach (DE)
(74) Vertreter: Mischung, Ralf

(57) **Zusammenfassung**

Transportbehälter zum Lagern und Transportieren von Waren, insbesondere Lebensmitteln, mit einem Bodenelement und wenigstens einem Seitenelement, wobei das Seitenelement wenigstens eine RFID-Transponder-Einheit trägt

## Beschreibung

Die vorliegende Erfindung betrifft einen Transportbehälter zum Lagern und Transportieren von Waren nach dem Oberbegriff des Anspruchs 1.

Derartige Behälter sind hinlänglich bekannt und insbesondere auf dem Lebensmittelsektor weit verbreitet. So werden von Lebensmittel-Handelsketten überwiegend sogenannte Rollbehälter eingesetzt, um darauf gestapelte Lebensmittel unterschiedlichster Art zu lagern und in den einzelnen Lebensmittelfilialen zu den jeweiligen Regalen befördern zu können. Derartige Rollbehälter weisen üblicherweise ein Bodenelement auf, welches die wesentliche Gewichtslast der zu transportierenden Güter aufnimmt bzw. auf die darunter angeordneten Rollen überträgt. Weiterhin sind wenigstens ein, üblicherweise jedoch zwei Seitenelemente vorgesehen, um die gestapelte Ware auch seitlich besser fixieren zu können.

Mitunter ist es aufwändig und schwierig, den Transportweg dieser Behälter oder auch die darauf zu transportierenden Güter genau zu dokumentieren, um den Wareneingang, den Warenausgang bzw. die Lagerverwaltung korrekt zu erfassen bzw. abwickeln zu können.

Aufgabe der Erfindung ist es daher, einen Transportbehälter der vorgenannten Art anzubieten, welcher zur Materialflussoptimierung ausgebildet ist.

Die Aufgabe wird gelöst durch einen Transportbehälter nach Anspruch 1.

Die Erfindung geht von der Erkenntnis aus, dass die Materialflussoptimierung im Hinblick auf die Transportbehälter bzw. die von diesen transportierten Güter erfolgen kann, indem der Transportbehälter mit wenigstens einer RFID-Transponder-Einheit ausgestattet wird. Eine solche - dem Fachmann bekannte - Einheit erlaubt das berührungslose Auslesen von in der Einheit hinterlegten Daten, ebenso wie die Speicherung von Daten in einem dafür vorgesehenen Speicherbereich innerhalb der Einheit. In erfinderischer Weise lassen sich damit behälterspezifische Daten in der RFID-Transponder-Einheit hinterlegen bzw. abfragen, um beispielsweise den Warenfluss kontrollieren und protokollieren zu können. Die RFID-Transponder-Einheit soll dabei erfindungsgemäß an mindestens einem Seitenelement des Transportbehälters angeordnet sein. Dadurch ergibt sich der Vorteil, dass die Einheit gegen die Beschädigung, beispielsweise durch Gabelstapler, im unteren Bereich des Behälters geschützt ist. Weiterhin lässt sich der Transponder in Hüft- oder Brusthöhe besonders ergonomisch ablesen. Schließlich lassen sich Störeinflüsse auf die Funktion der im oberen Bereich eines Seitenelements angebrachten Transpondereinheit besser vermeiden, da beispielsweise abschirmende metallische Dosen oder andere Waren oft nicht bis zu dieser Höhe auf dem Behälter gestapelt werden.

Ergänzend weist die Anordnung der RFID-Transponder-Einheit an einem Seitenelement des Transportbehälters noch den Vorteil auf, dass auch unterschiedliche Behälter nachträglich mit der Einheit ausgerüstet werden können, da die Seitenteile unterschiedlicher Behälter oft ähnlich gestaltet sind. Im Gegensatz dazu sind die Bodenelemente verschiedener Behälter oft sehr unterschiedlich ausgebildet, so dass die Bestückung verschiedener Behälter mit gleichen RFID-Transponder-Einheiten jeweils kostspielig auf die besondere Gestaltung des jeweiligen Bodenelements abgestimmt werden muss.

Nach einer vorteilhaften Ausführungsform der Erfindung wird das Seitenelement von einem im wesentlichen umlaufenden, vorzugsweise metallischen Rahmenkörper nach außen begrenzt. Der Rahmenkörper kann insbesondere die Form eines im Querschnitt runden oder rechteckigen Rohres aufweisen, und beispielsweise eine Gitterstruktur umlaufen bzw. stabilisieren, um mit dieser zusammen das eigentliche Seitenteil zu bilden. Die RFID-Transponder-Einheit soll erfindungsgemäß in einen Montageabschnitt des Rahmenkörpers eingesetzt werden. Durch die üblicherweise stabile Ausführung des Rahmenkörpers ist der darin eingesetzte Transponder besonders gut geschützt. Zugleich ist der Transponder - da er sich im Rahmenteil des Seitenelements befindet, auch dann recht gut zugänglich, wenn mehrere Behälter seitlich nebeneinander stehen.

Nach einer weiteren vorteilhaften Ausführungsform der Erfindung hat der Rahmenkörper einen im wesentlichen konstanten Standardquerschnitt, beispielsweise kreisförmig oder rechteckig bzw. quadratisch. Im Bereich des Montageabschnitts, in welchem die RFID-Transponder-Einheit angeordnet sein soll, weist der Rahmenkörper erfindungsgemäß jedoch eine Querschnittsdeformation auf, um die Einheit aufnehmen zu können. Die Querschnittsdeformation ist dabei so ausgebildet, dass sich diese zusammen mit der darin eingesetzten Transpondereinheit im wesentlichen wieder zu dem Standardquerschnitt ergänzt. Dadurch wird es erfindungsgemäß möglich, die RFID-Transponder-Einheit gut geschützt bzw. fluchtend in den Rahmenkörper einzubetten, wo sie gleichzeitig gut zugänglich bleibt. Der Rahmenkörper wird in diesem Fall nicht geschnitten oder geschlitzt, sondern lediglich durch Deformation mittels einer geeigneten Pressvorrichtung im Bereich des Montageabschnitts in eine neue Querschnittsform gebracht. Dies erleichtert die Montage der Transpondereinheit; zugleich behält der Rahmenkörper einen Großteil seiner Stabilität.

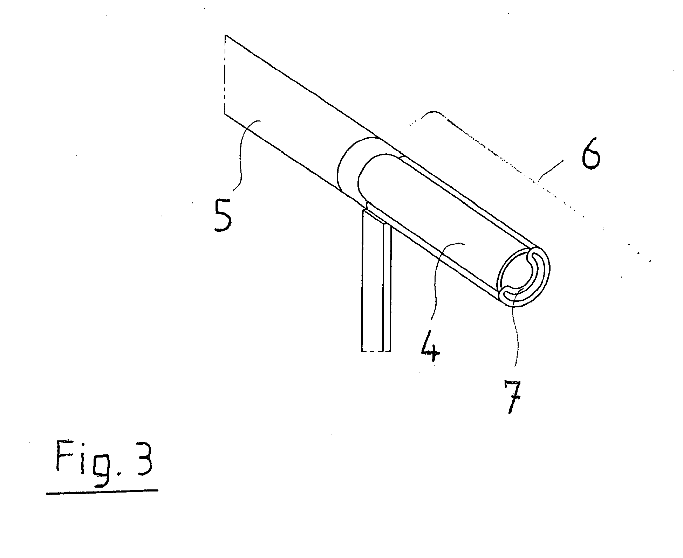

Besonders vorteilhaft erfolgt die Verformung aus einem kreisförmigen Standardquerschnitt zu einer im wesentlichen sichelförmigen bzw. nierenförmigen Gestalt, wie dies insbesondere aus Fig. 3 ersichtlich ist. Das dabei entstehenden "Bett" dient dann zur Aufnahme der RFID-Transponder-Einheit, die durch das "Bett" dabei gleichzeitig gut geschützt wird.

Die Querschnittsdeformation des Rahmenkörpers im Bereich des Montageabschnitts kann vorteilhafterweise mit einer Art Stempel erfolgen, der das Profil der später einzusetzenden Transpondereinheit im wesentlichen wiedergibt. Der zunächst rohrförmige Montageabschnitt wird dabei durch den Stempel so beaufschlagt, dass dieser das Rohr in eine sichel- bzw. nierenförmige Querschnittsgestalt überführt. Die ursprüngliche Stabilität des Rahmenkörpers wird dabei vorzugsweise erhalten oder (bspw. durch Kaltverformungseffekte) noch erhöht. Die dem Montageabschnitt benachbarten Bereiche des Rahmenkörpers bleiben dagegen unbelastet und behalten ihre ursprüngliche, vorzugsweise kreisförmige Querschnittsform. Nach Entnahme des Stempels lässt sich die RFID-Transponder-Einheit in das entstandene "Bett" einsetzen.

Erfindungsgemäß soll die Querschnittsdeformation zusammen mit der darin eingesetzten Transpondereinheit wieder den ursprünglichen Standardquerschnitt ausbilden, so dass die Einheit insbesondere nicht über diesen Querschnitt hinaus nach außen ragt. Durch ihre fluchtende Einbettung in das Standardprofil ist sie gegen mechanische Beanspruchung dann besonders vorteilhaft geschützt.

Eine alternative Ausführungsform der Erfindung sieht vor, dass der Rahmenkörper eine Aussparung aufweist, um die RFID-Transponder-Einheit darin aufzunehmen. In diesem Fall wird der Rahmenkörper beispielsweise geschlitzt oder in sonstiger Weise geöffnet oder teilweise entfernt, so dass in die entstehende Aussparung eine vorzugsweise komplementär dazu ausgebildete Transpondereinheit einsetzbar ist. Auch hier ragt die Einheit vorzugsweise nicht über den Standardquerschnitt des Rahmenkörpers hinaus.

Nach einer weiteren vorteilhaften Ausführungsform der Erfindung ist vorgesehen, dass wenigstens ein Teil des Seitenelements als Antenne der RFID-Transponder-Einheit ausgebildet ist. Dies erhöht vorteilhaft die Sende- und Empfangsreichweite zwischen der Einheit bzw. dem Transportbehälter und einem entsprechenden Lesegerät, welches beispielsweise vom Bedienpersonal gehandhabt wird. Vorzugsweise wird dabei eine galvanische Verbindung zwischen der RFID-Transponder-Einheit und wenigstens einem Teil des Rahmenkörpers hergestellt, was vorteilhafterweise allein durch das Einsetzen der Einheit in den Rahmenkörper geschehen kann. Alternativ oder ergänzend ist jedoch auch ein Verschrauben, Verlöten etc. eines geeigneten Anschlusskontaktes mit entsprechenden Kontakten am Rahmenkörper denkbar.

Erfindungsgemäß soll die RFID-Transponder-Einheit mit dem Seitenelement lösbar oder unlösbar verklebt, verschweißt, verklemmt oder verschraubt sein, wobei auch andere Befestigungsmechanismen in Frage kommen. Ergänzend kann die RFID-Transponder-Einheit einen innenliegenden RFID-Transponder schützend umgeben, beispielsweise in Form einer Kunstharzumhüllung. Dadurch wird der eigentliche Transponder auch gegen das Eindringen von Staub oder Feuchtigkeit geschützt.

Weitere vorteilhafte Ausführungsformen ergeben sich aus den Unteransprüchen.

Nachfolgend wird eine Ausführungsform der Erfindung anhand eines Figurenbeispiels näher erläutert. Von den Figuren zeigen:
- Fig. 1: einen erfindungsgemäßen Transportbehälter in Gesamtdarstellung,
- Fig. 2: einen Ausschnitt eines Seitenelements mit eingesetztem Transponder,
- Fig. 3: eine Schnittansicht des Montageabschnitts, und
- Fig. 4a, b: schematische Ansichten der RFID-Transponder-Einheit.

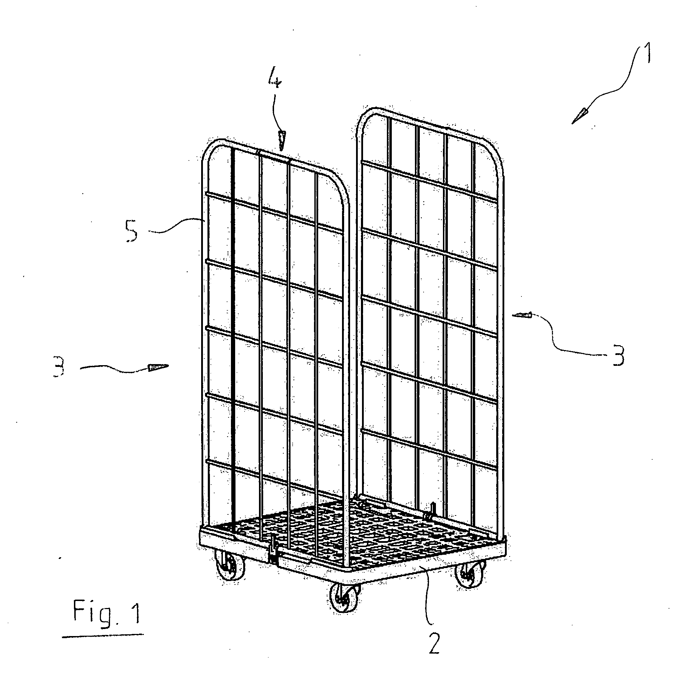

Der Transportbehälter gemäß Fig. 1 besteht aus einem Bodenelement 2 mit darunter angeordneten Rollen. In das Bodenelement 2 sind zwei Seitenelemente 3 gegenüberliegend eingesteckt und erstrecken sich im wesentlichen senkrecht nach oben. Jedes Seitenelement 3 zeigt dabei eine Gitterstruktur, die von einem die Struktur umlaufenden Rahmenkörper 5 nach außen begrenzt und stabilisiert wird. Der Rahmenkörper 5 besteht aus einem im Querschnitt kreisförmigen Rohr. In einem oberen waagerechten Abschnitt des Rahmenkörpers 5 ist eine RFID-Transponder-Einheit 4 eingesetzt.

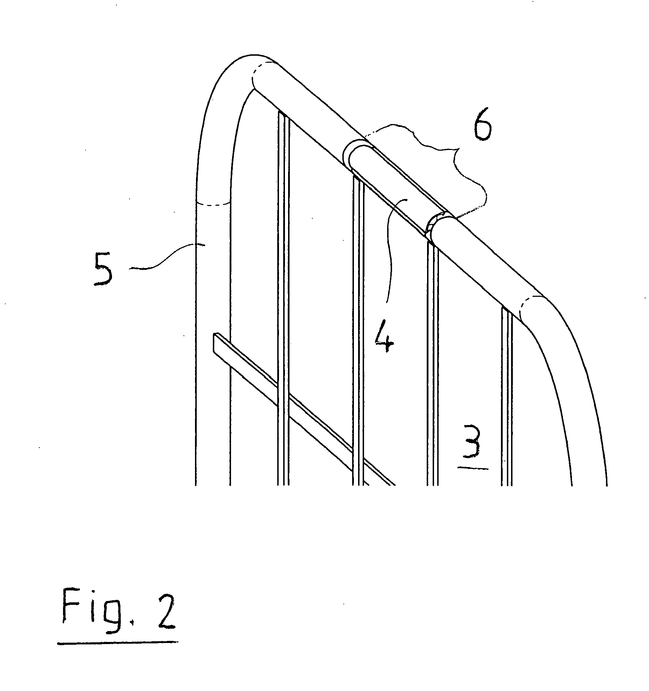

Fig. 2 zeigt in detaillierterer Ausführung die Einbettung der RFID-Transponder-Einheit 4 in den Rahmenkörper 5 des Seitenelements 3. Entlang eines Montageabschnitts 6 ist dabei das Querschnittsprofil des Rahmenkörpers 5 verformt worden, um die komplementär zu der Verformung ausgebildete RFID-Transponder-Einheit dort aufnehmen zu können. Zu beiden Seiten des Montageabschnitts 6 hält der Rahmenkörper seine im wesentlichen kreisförmige Querschnittsgestalt.

Fig. 3 zeigt in schematischer Schnittdarstellung die Einbettung der RFID-Transponder-Einheit in den Rahmenkörper 5 noch genauer. Zu erkennen ist insbesondere, wie im Bereich des Montageabschnitts 6 der Rahmenkörper 5 gegenüber seiner ursprünglich kreisförmigen Querschnittsgestalt eine Querschnittsdeformation 7 erfahren hat, die in Fig. 3 als sichel- bzw. nierenförmig zu erkennen ist. Das dabei entstandene "Bett" im Zentrum des ursprünglichen Kreisquerschnitts dient zur Aufnahme der komplementär dazu ausgebildeten RFID-Transponder-Einheit 4. Zu erkennen ist weiterhin, dass die Querschnittsdeformation 7 in Verbindung mit der eingesetzten RFID-Transponder-Einheit 4 im wesentlichen wieder den kreisförmigen Standardquerschnitt ausbildet, den der Rahmenkörper 5 jenseits des Montageabschnitts 6 aufweist. Da die RFID-Transponder-Einheit 4 damit fluchtend in den Rahmenkörper 5 eingesetzt ist und nicht übersteht, ist sie gegen mechanische Beaufschlagung bzw. Beschädigung gut geschützt.

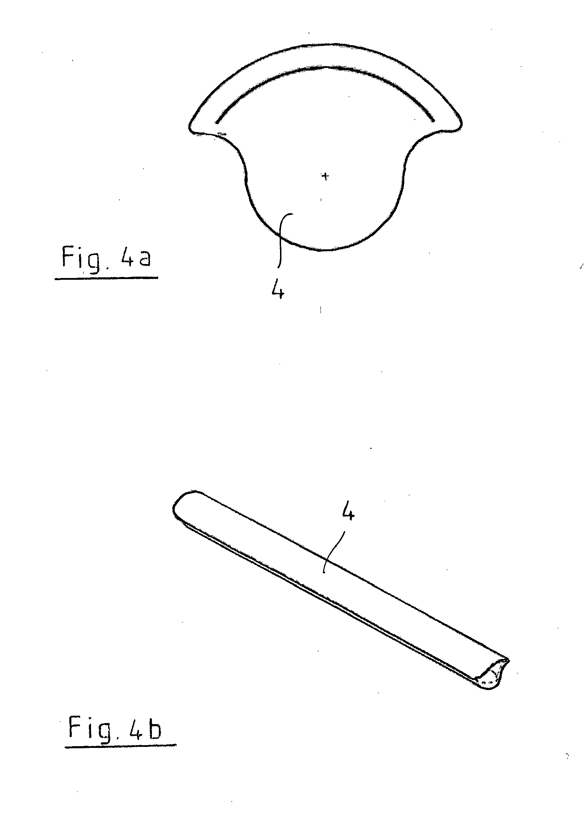

In Fig. 4a ist die RFID-Transponder-Einheit 4 im Querschnitt dargestellt. Gut zu erkennen ist in Verbindung mit Fig. 3 ihre komplementär zur Querschnittsdeformation 7 ausgebildete Gestalt.

Fig. 4b zeigt die RFID-Transponder-Einheit 4 in perspektivischer Ansicht.

## Patentansprüche

1. Transportbehälter (1) zum Lagern und Transportieren von Waren, insbesondere Lebensmitteln, mit einem Bodenelement (2) und wenigstens einem Seitenelement (3),
**dadurch gekennzeichnet, dass**
das Seitenelement wenigstens eine RFID-Transponder-Einheit (4) trägt.

2. Transportbehälter nach Anspruch 1, **dadurch gekennzeichnet, dass** das Seitenelement (3) von einem im wesentlichen umlaufenden, vorzugsweise metallischen, Rahmenkörper (5) begrenzt wird, wobei die RFID-Transponder-Einheit (4) in einen Montageabschnitt (6) des Rahmenkörpers (5) eingesetzt ist.

3. Transportbehälter nach Anspruch 2, **dadurch gekennzeichnet, dass** der Rahmenkörper (5) einen im wesentlichen konstanten Standard-Querschnitt hat, im Bereich des Monategabschnitts (6) jedoch eine zur RFID-Transponder-Einheit (4) komplementär ausgebildete Querschnittsdeformation (7) aufweist, so dass sich die Querschnittsdeformation (7) zusammen mit der darin eingesetzten RFID-Transponder-Einheit (4) im wesentlichen wieder zu dem Standard-Querschnitt ergänzt.

4. Transportbehälter nach Anspruch 3, **dadurch gekennzeichnet, dass** der Standard-Querschnitt kreisförmig ist und im Bereich des Monategabschnitts (6) zu einer im wesentlichen sichelförmigen bzw. nierenförmigen Gestalt verformt ist.

5. Transportbehälter nach Anspruch 2, **dadurch gekennzeichnet, dass** der Rahmenkörper (5) eine Aussparung aufweist zur Aufnahme der RFID-Transponder-Einheit (4).

6. Transportbehälter nach einem der Ansprüche 2 - 5, **dadurch gekennzeichnet, dass** die RFID-Transponder-Einheit (4) nicht über den Querschnitt hinausragt, welchen der Rahmenkörpers (5) in dem an den Montageabschnitt (6) angrenzenden Bereich aufweist.

7. Transportbehälter nach einem der vorigen Ansprüche, **dadurch gekennzeichnet, dass** wenigstens ein Teil des Seitenelements (3) als Antenne der RFID-Transponder-Einheit (4) ausgebildet ist.

8. Transportbehälter nach einem der vorigen Ansprüche, **dadurch gekennzeichnet, dass** die RFID-Transponder-Einheit (4) mit dem Seitenelement (3) lösbar oder unlösbar verklebt, verschweißt, verklemmt oder verschraubt ist.

9. Transportbehälter nach einem der vorigen Ansprüche, **dadurch gekennzeichnet, dass** die RFID-Transponder-Einheit (4) einen inneliegenden RFID-Transponder schützend umgibt.
